# EUROPEAN PATENT SPECIFICATION

(11) **EP 2 737 001 B1**
(45) Date of publication and mention of the grant of the patent: **30.05.2018**
(21) Application number: 12727058.5
(22) Date of filing: 06.06.2012
(51) Int. Cl.: C09K 8/68, F17D 1/17

(54) **A METHOD OF SLICKWATER FRACTURING**
VERFAHREN FÜR SLICKWATER-FRACTURING
PROCÉDÉ DE FRACTURATION HYDRAULIQUE MASSIVE

(30) Priority: 29.07.2011 US 201113194739
(43) Date of publication of application: 04.06.2014
(73) Proprietor: Baker Hughes, a GE company, LLC, Houston, TX 77073 (US)
(72) Inventor: SUN, Hong, Houston, Texas 77025 (US); QU, Qi, Spring, Texas 77379 (US)
(74) Representative: Beacham, Annabel Rose
(86) International application number: PCT/US2012/040991
(87) International publication number: WO 2013/019308

(56) References cited:
- WO-A2-03/050387
- WO-A2-2008/020388
- US-A1- 2006 185 848
- US-A1- 2008 190 619
- US-B1- 7 237 610

## Description

### Field of the Invention

The present invention relates to a new method for hydraulic fracturing of a subterranean formation penetrated by a wellbore.

### Background of the Invention

Hydraulic fracturing techniques are widely used to stimulate oil and gas production from low-permeability reservoirs. During hydraulic fracturing, a fluid is injected into a wellbore under high pressure causing fractures to open around the wellbore and into the subterranean formation. Often a proppant, such as sand, is included in the fracturing fluid to keep the fractures open when the treatment is complete. Ideally, hydraulic fracturing creates high-conductivity communication with a large area of the formation allowing for an increased rate of oil or gas production.

Slickwater fracturing is a type of hydraulic fracturing that uses a low viscosity aqueous fluid to induce the subterranean fracture. Slickwater fluids are basically fresh water or brine having sufficient friction reducing agent to minimize the tubular friction pressures. Such fluids, generally, have viscosities only slightly higher than unadulterated fresh water or brine. Typically, the friction reduction agents present in slickwater do not increase the viscosity of the fracturing fluid by more than 1 to 2 centipoise (cP) (1x10⁻³ to 2x10⁻³ Pa·s).

Slickwater fluids often contain proppants. In light of the low viscosity of the fluid, its proppant-carrying capacity is lower than that of the crosslinked polymer gels used for non-slickwater fracturing. A lower concentration of proppant requires a higher volume of fracturing fluid to place a sufficient amount of the proppant into the induced fractures. Proppant settling from low viscosity fracturing fluids within the horizontal section of the wellbore, the manifold lines, and the pump is also a concern. Excessive proppant settling within a horizontal wellbore can necessitate cessation of fracturing treatments prior to placement of the desired volumes. The proppant may also settle in the manifold lines before it even reaches the wellhead. The proppant may even settle in the pump damaging the pistons. This is particularly a problem when the proppant is composed of high compressive strength, such as ceramics. Typically, settling occurs as a result of insufficient slurry flow velocity and/or insufficient viscosity to suspend the proppant. In order to mitigate settling issues, high pumping rates are employed to effectively suspend the proppant for transport. However, high pumping rates can result in higher than desirable pumping pressures and excessive fracture height growth. Further, since manifolds have different dimensions, mere modification of pump rate for the fluid in one area may not address the problem in another. Because of the large quantities of fracturing fluid needed, the high velocity of the fluid flow, and the irregularities of the subterranean formation, energy loss from friction can often prevent effective fracturing of the formation.

The flow of a fluid through a conduit induces frictional energy losses. The pressure of the liquid in the conduit decreases in the direction of the fluid flow. For a conduit with a fixed diameter, this drop in pressure increases with an increasing flow rate. The pressure decrease signifies the loss of energy. Slickwater fracturing relies on high pump rates typically above 100 bpm (0.36 m³/s); hence, a large amount of energy is lost due to the friction between the conduit and fracturing fluid.

In rheology, the Reynolds number is a dimensionless ratio of the inertial forces to the viscous forces of a fluid under flow conditions. The Reynolds number can be used to characterize the fluid flow as laminar or turbulent. Laminar flow occurs when the viscous forces dominant the inertial forces resulting in a low Reynolds number. Turbulent flow occurs when the inertial forces dominant the viscous forces resulting in a high Reynolds number. Laminar flow occurs when the fluid flows in parallel sheets or coaxial layers with little mixing between the layers. Turbulent flow is the opposite of laminar flow and occurs when there is cross currents perpendicular to the flow of the fluid giving rise to lateral mixing and eddies.

Generally, high molecular weight linear polymers are used to alter the rheological properties of the fluid so that the turbulent flow is minimized, thereby preventing consequent energy loss in the fluid as it is pumped through the pipe. A good friction reducer will cause a large decrease in friction at small concentrations, will be inexpensive, will be environmentally friendly, and will have high shear, temperature, and pressure stability.

The most common friction reducers are polyacrylamide (PAM) polymers. Various copolymers have also been developed to further enhance the performance of polyacrylamide friction reducer. Sodium acrylamido-2-methylpropane sulfonate (sodium AMPS) and acrylic acid are common monomers besides the acrylamide in these copolymers to improve the hydration of the friction reducers.

Often there is difficulty in handling such high molecular weight polymers because of their low rate of hydration and high viscosity when made into a slurry. To circumvent these problems, the polyacrylamide-based polymer is often made in or into an emulsion, where the polymer is dispersed in a hydrocarbon solvent, such as mineral oil, and stabilized with surfactants. However, this too has drawbacks because of the environmental toxicity of the hydrocarbons and the surfactants in case of a spill and the potential fire hazard associated with the hydrocarbon solvent.

Many polymer friction reducers show a reduced performance in the presence of low molecular weight additives, such as acids, bases, and salts. Ionically- charged polymers are particularly susceptible. For example, polymers containing the acrylate monomer, either added as a copolymer or hydrolyzed from polyacrylamide, have a reduced compatibility with high calcium brines. The additives screen the charges on the polymer backbone which decreases the hydrodynamic radius of the polymer. With the decrease in effective polymer length, the friction reduction also decreases.

Hydraulic fracturing has been a boon to the oil and gas industry. Many oil and gas wells have been made more productive due to the procedure. However, the hydraulic fracturing business is now facing increasing scrutiny and government regulation. The industry is responding by searching for more environmentally friendly chemicals to put into their hydraulic fracturing fluids.

In addition, large volumes of water are required for hydraulic fracturing operations. Fresh water may be a limiting factor in some areas. A slickwater fracturing composition that can use a variety of water sources, such as produced water from the formation or flowback water after a well treatment, could significantly enhance the field applicability.

US Patent Application 2008/190619 discloses a method of reducing fluid loss during fracturing by injecting a fluid having a viscosity less than 50 cP at 170sec-1 , preferably less than 10 cP at 170sec-1, and comprising slickwater, proppant and from 0.01 to 10 wt% of a low molecular viscosifying agent. Said viscosifying agent is selected amongst a group comprising in particular polyethylene oxide and depolymerized guar.

There is an ongoing need to develop slickwater fracturing fluids that have effective friction reduction to minimize energy loss but yet have sufficient viscosity for proppant-carrying capacity while being safe and environmentally friendly.

### Summary of the Invention

The present invention is directed to a method of slickwater fracturing comprising introducing into a wellbore penetrating a subterranean formation an aqueous fracturing fluid at a pressure sufficient to create or enlarge a fracture in the subterranean formation, the fluid comprising:
a) a nonionic polymer that is not polyethylene oxide; and
b) polyethylene oxide;
the amount of nonionic polymer employed is between from 0.1 to 5 pounds per 1,000 gallons of water (from 12 to 600 g per 1,000 litres of water) in the fluid;
wherein the weight ratio of the polyethylene oxide and nonionic polymer in the fracturing fluid is between 20 : 1 to 1 : 20;
wherein the weight average molecular weight of the polyethylene oxide is from 1 M to 20 M; and
wherein the amount of polyethylene oxide is from 20 ppm to 400 ppm in the fracturing fluid.
Polyethylene oxide (PEO) provides friction reduction to the fracturing fluid so it can be more efficiently pumped into the subterranean formation. However, polyethylene oxide is prone to shear degradation, which commonly occurs under turbulent flow conditions arising from high pressure pumping. A nonionic polymer that is not polyethylene oxide is included in the fracturing composition to absorb the shear forces and protect the polyethylene oxide from degradation. The nonionic polymer also adds viscosity to the fracturing fluid to provide effective proppant-carrying capacity.

The nonionic polymer may be any polymer that inhibits the shear degradation of the polyethylene oxide and imparts sufficient viscosity to effectively carry proppant into the formed fractures. In the most preferred embodiment, guar is the nonionic polymer for the fracturing fluid. In another preferred embodiment, a guar derivative is the nonionic polymer.

A proppant may be added to the fracturing fluid.

The fracturing fluid composition may include a surfactant. A nonionic surfactant may be used (other than the nonionic polymer or PEO). A cationic or anionic or zwitterionic surfactant may be used.

These and other features, aspects, and advantages of the present invention will become better understood with reference to the following description and claims.

### Brief Description of the Drawings

The features, aspects, and advantages of the present invention will become better understood with regard to the following description, appended claims, and accompanying drawings:
FIG. 1 shows a flow loop test comparison of the percent friction reduction and the hydration time between polyethylene oxide and polyacrylamide;
FIG. 2 shows the results of flow loop tests performed on four mixtures of polyethylene oxide and guar;
FIG. 3 shows a flow loop test comparison of a polyethylene oxide/guar mixture compared with polyacrylamide friction reducers, all of which were made with flowback water.

### Detailed Description of the Preferred Embodiments

Illustrative embodiments of the invention are described below as they might be employed in the operation and in the treatment of oilfield applications. In the interest of clarity, not all features of an actual implementation are described in this specification. It will of course be appreciated that in the development of any such actual embodiment, numerous implementation-specific decisions must be made to achieve the developers' specific goals, which will vary from one implementation to another. Moreover, it will be appreciated that such a development effort might be complex and time-consuming, but would nevertheless be a routine undertaking for those of ordinary skill in the art having the benefit of this disclosure. Further aspects and advantages of the various embodiments of the invention will become apparent from consideration of the following description.

The present invention is directed to a method of slickwater fracturing comprising introducing into a wellbore penetrating a subterranean formation an aqueous fracturing fluid at a pressure sufficient to create or enlarge a fracture in the subterranean formation, the fluid comprising:
a) a nonionic polymer that is not polyethylene oxide; and
b) polyethylene oxide;
the amount of nonionic polymer employed is between from 0.1 to 5 pounds per 1,000 gallons of water (from 12 to 600 g per 1,000 litres of water) in the fluid;
wherein the weight ratio of the polyethylene oxide and nonionic polymer in the fracturing fluid is between 20 : 1 to 1 : 20;
wherein the weight average molecular weight of the polyethylene oxide is from 1 M to 20 M; and
wherein the amount of polyethylene oxide is from 20 ppm to 400 ppm in the fracturing fluid.
The fracturing fluid typically does not contain a crosslinking agent and the components present in the fracturing fluid are not crosslinked.

The viscosity of the fracturing fluid is typically less than 15 cP (0.015 Pa·s) at 300 rpm, more typically less than 3 cP (3x10⁻³ Pa·s) at 300 rpm.

The weight ratio of the polyethylene oxide and nonionic polymer in the fracturing fluid is between from 20 : 1 to 1 : 20, more typically between from 5 : 1 to 1 : 5.

The aqueous fracturing fluid is capable of reducing friction by as much as 60% in slickwater fracturing operations.

Polyethylene oxide (PEO) is a straight-chained, high molecular weight polymer that functions as a friction reducer for the fracturing fluid so it can be more efficiently pumped to the subterranean formation. Heretofore, PEO's use as friction reducer "appears to be outside the oil industry, since it is prone to shear degradation when injected or under turbulent flow." MALCOM A. KELLAND, PRODUCTION CHEMICALS FOR THE OIL AND GAS INDUSTRY 392 (CRC Press, 2009). A nonionic polymer is included in the fracturing composition to absorb the shear forces and protect the PEO from degradation. Comparing a fracturing fluid containing 100 percent PEO versus a fracturing fluid containing the weight ratios of PEO and nonionic polymer defined herein, shear degradation from the turbulent flow of the fracturing fluid is reduced at least 15% and more typically as high as 40%. The nonionic polymer also imparts its own friction reduction capabilities and adds viscosity to the fracturing fluid to provide effective proppant-carrying capacity.

Polyethylene oxide is a neutral polymer; hence, it has a low sensitivity to the salinity of the water sources used to make fracturing fluid. PEO also contains oxygen as a repeating unit along its polymer backbone. This gives the polymer polarity and a strong affinity towards water, which translates to fast hydration times, even at very low temperatures. Further, PEO has been considered to be an inert ingredient by the Environmental Protection Agency and thus is environmentally friendly.

The weight average molecular weight of the polyethylene oxide used in the fracturing fluid is between from 1 M to 20 M, more preferably between from 2 M to about 10 M. The amount of PEO in the fracturing fluid is between 20 ppm to 400 ppm, more typically between from 20 ppm to about 100 ppm.

In an aspect, dry, solid-phase PEO may be used to make the fracturing fluid at the well site. However, dry polymers are difficult to add into the fluid, requiring special equipment as well as significant energy and water consumption to assure adequate makedown of the dry polymer into an active dilute form. In remote drilling locations equipment, energy and water are often in short supply and require significant financial input to secure. Solid PEO with its high molecular weight can be difficult to dissolve directly in water, showing a tendency to agglomerate. In accordance with the principles of the invention, solid PEO may be dispersed into polyol solvents, such as glycerin or propylene glycol, to form a slurry that can then be easily transported and metered.

A nonionic polymer is included in the fracturing composition to absorb the shear forces arising from the high velocity pumping to protect the polyethylene oxide from degradation and to add viscosity to the fracturing fluid to provide effective proppant-carrying capacity. The nonionic polymer is preferably an environmentally friendly polymer to complement the environmentally friendly nature of PEO.

In the most preferred embodiment of the present invention the nonionic polymer is guar. In another preferred embodiment of the present invention the nonionic polymer is a guar derivative.

In accordance with the principles of the invention, the guar source may include any grade of guar gum. In an aspect, the guar source may be guar pod harvested from the endosperm of leguminous seeds. Typically, the guar source may be the endosperm, also called the guar split, which constitutes approximately 30-40% of the seed. The guar source may further be derived from the reminder of the seed, referred to as the hull (approximately 15%) and the inner germ (approximately 45%). For instance, the guar source may be the refined guar split, which is the polished fibrous layers that are removed from the husk. The guar source may further be guar gum that is produced from refined guar split by softening, flaking, pulverization and sieving.

In an aspect, guar is in a powder form. Typically, powders having a size of between about 60 mesh (250 µm) and about 400 mesh (37 µm), more typically between about 100 (149 µm) to about 325 mesh (44 µm).

Suitable guar derivatives include carboxyalkyl guars and hydroxyalkyl guars. Preferred are carboxymethyl guar, hydroxypropyl guar, hydroxy ethyl guar, hydroxybutyl guar and carboxymethylhydroxypropyl guar. Preferably the hydroxyalkylated guar has a molecular weight of about 1 to about 3 million. In an aspect, the degree of substitution of the carboxylated guar is typically between from about 0.08 to about 0.18. In an aspect, hydroxypropyl content of the hydroxyalkylated guar is typically between from about 0.2 to about 0.6. Further, the guar polymer may be any of those disclosed in U.S. Patent Nos. 7,012,044; 6,844,296 and 6,387,853 as well as U.S. Patent Publication Nos. 20050272612; 20110015100; and 20110015100.

The carboxyalkyl guar can be obtained in many ways, including a) using premium grade guar as the starting material to which the anionic groups are chemically added; and/or b) selecting processing parameters that provide better uniformity in placing the anionic substituent on the guar polymer backbone; and/or c) additional processing steps, including ultrawashing to remove impurities and refine the polymer. Preferred polymers include those guars having randomly distributed carboxymethyl groups.

Preferred nonionic polymers for use in the invention are those polymers available from Baker Hughes Incorporated as "GW45" (CMG), "GW32" (HPG) and "GW38" (CMHPG). Slurried counterparts of these polymers may also be used and are available from Baker Hughes Incorporated as "XLFC2" (HPG), "XLFC2B" (HPG), "XLFC3" (CMPHG) "XLFC3B" (CMHPG), "VSP1" (CMG), and "VSP2" (CMG). In another preferred embodiment, guar powder known as "GUAR X0694- 17-1" available from Aqualon (Hercules, Inc.) may be used.

In another embodiment in accord with the principles of the invention, the nonionic polymer may be cellulose, a cellulose derivative, starch, a starch derivative, xanthan, a xanthan derivative, and mixtures thereof. Specific examples include, but are not limited to, hydroxyethyl cellulose (HEC), carboxymethyl hydroxyethyl cellulose (CMHEC), carboxymethyl cellulose (CMC), dialkyl carboxymethyl cellulose, locust bean gum, welan gum, karaya gum, xanthan gum, scleroglucan, and diutan.

The amount of nonionic polymer employed is between from 0.1 to 5, preferably from about 0.5 to about 2, pounds per 1,000 gallons of water in the fluid (from 12 to 600g, preferably from 60 to 240g, per 1,000 litres of water).

The aqueous fluid may be brine, fresh water, salt water or mixtures thereof. In an aspect, the brine may be flowback from a previous well treatment. In an aspect, the water may be produced water from a subterranean formation. In an aspect, the water may be fresh water from municipal sources or river water. Produced water or flowback water may gradually increase in salinity over time. For example, in the Marcellus Shale region, a slickwater fracturing treatment can have the total dissolved solute (TDS) in the later part of the flowback in the range from about 80,000 to 325,000. In an aspect, the reuse of early flowback water when the TDS concentration is lower may be used. The flowback water may be mixed with fresh water.

In an embodiment of the present invention, the fracturing fluid may contain one or more types of proppant. Suitable proppants include those conventionally known in the art including quartz, sand grains, glass beads, aluminum pellets, ceramics, resin coated ceramics, plastic beads, nylon beads or pellets, resin coated sands, sintered bauxite and resin-coated sintered bauxite.

In a preferred embodiment, the proppant is a relatively lightweight particulate. Such proppants may be chipped, ground, crushed, or otherwise processed. By "relatively lightweight" it is meant that the proppant has an apparent specific gravity (ASG) that is substantially less than a conventional proppant employed in hydraulic fracturing operations, e.g., sand or having an ASG similar to these materials. Especially preferred are those proppants having an ASG less than or equal to 3.25. Even more preferred are ultra lightweight proppants having an ASG less than or equal to 2.25, more preferably less than or equal to 2.0, even more preferably less than or equal to 1.75, most preferably less than or equal to 1.25 and often less than or equal to 1.05.

Suitable relatively lightweight proppants are those particulates disclosed in U.S. Patent Nos. 6,364,018, 6,330,916 and 6,059,034. These may be exemplified by ground or crushed shells of nuts (pecan, coconut, almond, ivory nut, brazil nut, macadamia nut, etc); ground or crushed seed shells (including fruit pits) of seeds of fruits such as plum, olive, peach, cherry, apricot, etc.; ground or crushed seed shells of other plants such as maize (e.g. corn cobs or corn kernels), etc.; processed wood materials such as those derived from woods such as oak, hickory, walnut, poplar, mahogany, etc. including such woods that have been processed by grinding, chipping, or other form of particalization. Preferred are ground or crushed walnut shell materials coated with a resin to substantially protect and water proof the shell.

Further, the relatively lightweight particulate for use in the invention may be a selectively configured porous particulate, as set forth, illustrated and defined in U.S. Patent No. 7,426,961. Suitable proppants further include those set forth in U.S. Patent No. 7,931,087 and U.S. Patent No. 7,494,711. The proppant may further be a plastic or a plastic composite such as a thermoplastic or thermoplastic composite or a resin or an aggregate containing a binder. The ULW proppant may further be any of those deformable particulates set forth in U.S. Patent No. 7,322,411.

Mixtures of proppants may further be used.

It is desirable that a proppant pack formed of the proppant be capable of creating a partial monolayer of proppant in the fracture to provide increased interconnected interstitial spaces between abutting particulates. Increased fracture conductivity results since the produced fluids typically flow around the widely-spaced proppant particulates rather than through the interstitial spaces in a packed bed.

In an aspect, the amount of proppant in the fracturing fluid may be between about 0.5 to about 12.0, pounds of proppant per gallon (between about 60 to about 1440g of proppant per litre) of fracturing fluid. Preferably, it may be between from about 0.25 to about 4.0 pounds per gallon (between from about 30 to about 480g of proppant per litre) of fracturing fluid.

While subterranean formation clays are ordinarily inert, the swelling and migration of formation clay particles is often increased when formation clays are disturbed by foreign substances, such as aqueous fracturing fluids. The swelling and migration of formation clay reduces the permeability of the formation by obstructing the formation capillaries and therefore resulting in a loss of formation permeability and significant reduction in the flow rate of hydrocarbons. Such obstruction results, for example, by the migration of formation clays into capillary flow channels of the formation. This in turn causes significant reduction in the flow rate of produced hydrocarbons. To diminish the damaging effects caused by the swelling and migration of formation clays shale inhibitors and/or clay stabilizers may be incorporated into the slickwater composition.

In an aspect, the clay stabilizer or shale inhibitor may be an inorganic salt, such as potassium chloride or ammonium chloride. In an aspect, the clay stabilizer or shale inhibitor may be an organic salt, such as, choline chloride. In an aspect, the choline chloride may be a quaternary ammonium salt containing the N,N,N-trimethylethanolammonium cation. In a preferred embodiment, the clay stabilizer may be Claytreat-3C clay stabilizer (CT-3C) or Claymaster-5C both by Baker Hughes Inc.

In an aspect, the concentration of such clay stabilizers or shale inhibitors is about 0.1% based upon the weight of the aqueous fluid.

In accordance with the principles of the invention, surfactants may be included in the fracturing fluid composition. Surfactants are capable of friction reduction and may also protect the polyethylene oxide from shear degradation.

The surfactant may be cationic, anionic, amphoteric, or nonionic. Included as cationic surfactants are those containing a quaternary ammonium moiety (such as a linear quaternary amine, a benzyl quaternary amine or a quaternary ammonium halide), a quaternary sulfonium moiety or a quaternary phosphonium moiety or mixtures thereof. Suitable surfactants containing a quaternary group include quaternary ammonium halide or quaternary amine, such as quaternary ammonium chloride or a quaternary ammonium bromide. Suitable anionic surfactants are sulfonates (like sodium xylene sulfonate and sodium naphthalene sulfonate), phosphonates, ethoxysulfates and mixtures thereof. Included as amphoteric surfactants are glycinates, amphoacetates, propionates, betaines, and mixtures thereof. The cationic or amphoteric surfactant may have a hydrophobic tail (which may be saturated or unsaturated), such as a C12-C18 carbon chain. Further, the hydrophobic tail may be obtained from a natural oil from plants such as one or more of coconut oil, rapeseed oil and palm oil.

Preferred surfactants include N,N,N-trimethyl-I-octadecammonium chloride, N,N,N-trimethyl-I-hexadecammonium chloride, N,N,N-trimethyl-I- soyaammonium chloride, and mixtures thereof.

The fracturing fluid may also contain other conventional additives common to the well service industry such as corrosion inhibitors, demulsifying agents, scale inhibitors, paraffin inhibitors, gas hydrate inhibitors, asphaltene inhibitors, dispersants, oxygen scavengers, biocides, and the like.

### Examples

The following examples describe the preferred embodiments of the present invention. Other embodiments within the scope of the claims will be apparent to those skilled in the art from the consideration of the specification or practice of the invention disclosed herein.

### Example 1

Flow loop tests were conducted on polyethylene oxide slurry to measure its friction reduction capability and its rate of hydration. These results were compared with a commercially polyacrylamide friction reducer, FRW-20, available from Baker Hughes Incorporated.

A polyethylene oxide slurry was made by placing 200 g of glycerin in an overhead mixer rotating at 1000 rpm and then adding 40 g of PEO (MW > 8 M) powders over a two minute period. The slurry was then allowed to mix for at least 30 minutes to ensure sufficient dispersion.

24 mL of the PEO slurry was then injected into 24 L of CaCl₂ solution with a density of 10.5 ppg (1520 g/L). The solutions were run on a friction loop at 90 °F (32°C).

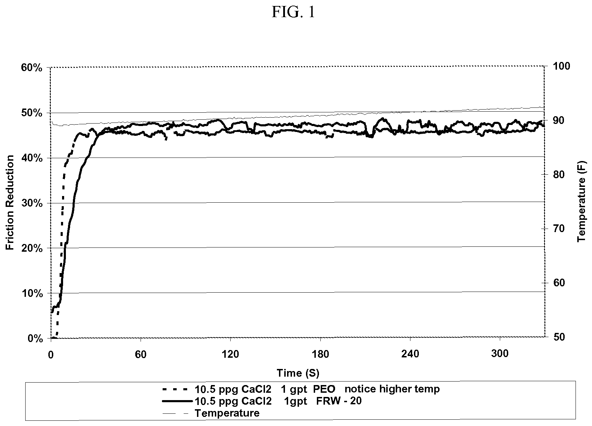

FIG 1. shows that the PEO slurry hydrates quicker than FRW-20 in 10.5 ppg (1520 g/L) CaCl₂ brine. The PEO hydrates in about 15 s at 90 °F (32°C). Also, FIG 1. shows that polyethylene oxide achieves a 45% friction reduction, which is the same percent friction reduction by the polyacrylamide.

### Example 2

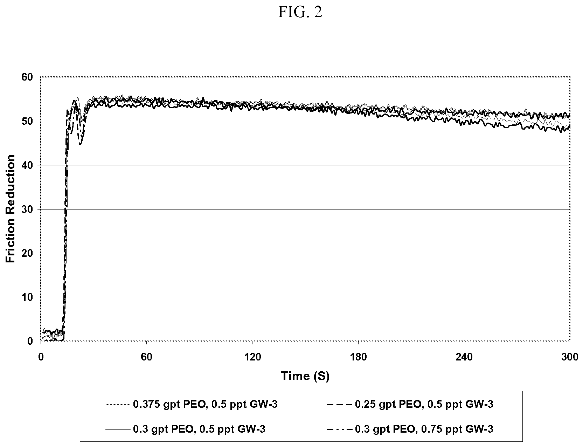

Flow loop tests were conducted on mixtures of polyethylene oxide and guar to measure their friction reduction capabilities. A PEO slurry was made as described in Example 1. This slurry was then mixed with guar to make four slurry samples. The samples were tested in water run on a flow loop with 0.319 inch (0.810 cm) tubing at 10 gallons per minute (gpm) (6x10⁻⁴ m³/s). FIG. 2 shows that each of the four PEO-guar mixtures achieved a greater than 50% friction reduction.

### Example 3

Flow loop tests were conducted on a mixture of polyethylene oxide and guar slurry injected in flowback water. Two commercially available polyacrylamide friction reducers were also tested in the same flowback water to compare their hydration rates and percent friction reduction.

A PEO slurry was made as described in Example 1. Flowback water with total dissolved salts of over 26.5% and divalent ions over 4%. GW-3, an underivatized guar commercially available from Baker Hughes Inc., was added to the PEO slurry and was injected into the flowback water at a concentration of 1 gpt. (0.1 vol.%). The polyacrylamide friction reducers FRW-14 and FRW-20, both commercially available from Baker Hughes Inc., were injected into the diluted flowback water at a concentration of 0.75 gpt (0.075 vol.%). The three samples were run a flow loop at room temperature.

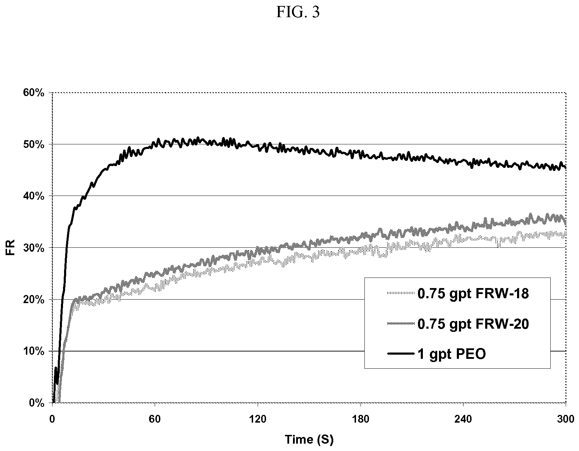

FIG. 3 shows the comparison of the friction reduction and hydration rates of the three samples. It can be seen that both FRW-14 and FRW-20 reach about only 25% friction reduction after 60 s while the PEO and guar solution achieves a 50% friction reduction in 60 s.

## Claims

1. A method of slickwater fracturing comprising introducing into a wellbore penetrating a subterranean formation an aqueous fracturing fluid at a pressure sufficient to create or enlarge a fracture in the subterranean formation, the fluid comprising:
a) a nonionic polymer that is not polyethylene oxide; and
b) polyethylene oxide;
the amount of nonionic polymer employed is between from 0.1 to 5 pounds per 1,000 gallons of water (from 12 to 600 g per 1,000 litres of water) in the fluid;
wherein the weight ratio of the polyethylene oxide and nonionic polymer in the fracturing fluid is between 20 : 1 to 1 : 20;
wherein the weight average molecular weight of the polyethylene oxide is from 1 M to 20 M; and
wherein the amount of polyethylene oxide is from 20 ppm to 400 ppm in the fracturing fluid.

2. The method of claim 1, wherein the nonionic polymer is non-derivatized guar or derivatized guar.

3. The method of claim 1, wherein the nonionic polymer is a polysaccharide.

4. The method of claim 1, wherein the aqueous fracturing fluid further comprises:
c) a cationic, anionic, zwitterionic or nonionic surfactant, other than polyethylene oxide or the nonionic polymer.

5. The method of claim 1, wherein the fracturing fluid does not contain a surfactant, or wherein the fracturing fluid does not contain a crosslinking agent or a component which is crosslinked.

6. The method of claim 2, wherein the fracturing fluid further comprises: c) a nonionic surfactant, other than polyethylene oxide and the nonionic polymer.

7. The method of claim 1, wherein the weight average molecular weight of the polyethylene oxide in the aqueous fracturing fluid is between from 2 M to 10M.

8. The method of claim 1, wherein the weight ratio of nonionic polymer:polyethylene oxide is from 1 : 5 to 5 : 1.

9. The method of claim 1, wherein the fracturing fluid further comprises a proppant.

10. The method of claim 9, wherein the apparent specific gravity of the proppant is less than or equal to 2.25, preferably wherein the apparent specific gravity of the proppant is less than or equal to 1.75.

11. The method of claim 1, wherein the non-ionic polymer is guar powder having a particle size of from 60 to 400 mesh (37 to 250 µm).

## Patentansprüche

1. Verfahren zur Slickwater-Frakturierung, umfassend das Einleiten eines wässrigen Frakturierungsfluids in ein Bohrloch, das eine unterirdische Formation durchdringt, bei einem Druck, der ausreicht, um einen Bruch in der unterirdischen Formation zu erzeugen oder zu vergrößern, wobei das Fluid Folgendes umfasst:
a) ein nichtionisches Polymer, das nicht Polyethylenoxid ist; und
b) Polyethylenoxid;
wobei die Menge des verwendeten nichtionischen Polymers zwischen 0,1 und 5 Pfund pro 1000 Gallonen Wasser (12 bis 600 g pro 1 000 Liter Wasser) in dem Fluid beträgt;
wobei das Gewichtsverhältnis des Polyethylenoxids und des nichtionischen Polymers in dem Frakturierungsfluid zwischen 20:1 und 1:20 beträgt;
wobei das gewichtsgemittelte Molekulargewicht des Polyethylenoxids 1 M bis 20 M beträgt; und
wobei die Menge an Polyethylenoxid in dem Frakturierungsfluid 20 ppm bis 400 ppm beträgt.

2. Verfahren nach Anspruch 1, wobei das nichtionische Polymer nicht-derivatisiertes Guaran oder derivatisiertes Guaran ist.

3. Verfahren nach Anspruch 1, wobei das nichtionische Polymer ein Polysaccharid ist.

4. Verfahren nach Anspruch 1, wobei das wässrige Frakturierungsfluid weiter Folgendes umfasst:
c) ein kationisches, anionisches, zwitterionisches oder nichtionisches Tensid, das von Polyethylenoxid oder dem nichtionischen Polymer verschieden ist.

5. Verfahren nach Anspruch 1, wobei das Frakturierungsfluid kein Tensid enthält oder wobei das Frakturierungsfluid kein Vernetzungsmittel und keine Komponente, die vernetzt ist, enthält.

6. Verfahren nach Anspruch 2, wobei das Frakturierungsfluid weiter Folgendes umfasst: c) ein nichtionisches Tensid, das von Polyethylenoxid und dem nichtionischen Polymer verschieden ist.

7. Verfahren nach Anspruch 1, wobei das gewichtsgemittelte Molekulargewicht des Polyethylenoxids in dem wässrigen Frakturierungsfluid zwischen 2 M und 10 M beträgt.

8. Verfahren nach Anspruch 1, wobei das Gewichtsverhältnis des nichtionischen Polymers:Polyethylenoxid 1:5 bis 5:1 beträgt.

9. Verfahren nach Anspruch 1, wobei das Frakturierungsfluid weiter ein Stützmittel umfasst.

10. Verfahren nach Anspruch 9, wobei das scheinbare spezifische Gewicht des Stützmittels kleiner oder gleich 2,25 ist, wobei das scheinbare spezifische Gewicht des Stützmittels vorzugsweise kleiner oder gleich 1,75 ist.

11. Verfahren nach Anspruch 1, wobei das nichtionische Polymer Guaranpulver mit einer Partikelgröße von 60 bis 400 Mesh (37 bis 250 µm) ist.

## Revendications

1. Procédé de fracturation à l'eau lubrifiante comprenant l'introduction dans un puits de forage pénétrant dans une formation souterraine d'un fluide de fracturation aqueux à une pression suffisante pour créer ou agrandir une fracture dans la formation souterraine, le fluide comprenant :
a) un polymère non ionique qui n'est pas de l'oxyde de polyéthylène ; et
b) de l'oxyde de polyéthylène ;
la quantité de polymère non ionique utilisée est comprise entre 0,1 et 5 livres pour 1000 gallons d'eau (de 12 à 600 g pour 1000 litres d'eau) dans le fluide ;
dans lequel le rapport pondéral entre l'oxyde de polyéthylène et le polymère non ionique dans le fluide de fracturation est compris entre 20 : 1 et 1 : 20 ;
dans lequel le poids moléculaire moyen en poids de l'oxyde de polyéthylène est de 1 M à 20 M ; et
dans lequel la quantité d'oxyde de polyéthylène est de 20 ppm à 400 ppm dans le fluide de fracturation.

2. Procédé selon la revendication 1, dans lequel le polymère non ionique est de la guar non dérivée ou de la guar dérivée.

3. Procédé selon la revendication 1, dans lequel le polymère non ionique est un polysaccharide.

4. Procédé selon la revendication 1, dans lequel le fluide de fracturation aqueux comprend en outre :
c) un tensioactif cationique, anionique, zwitterionique ou non ionique, autre que de l'oxyde de polyéthylène ou le polymère non ionique.

5. Procédé selon la revendication 1, dans lequel le fluide de fracturation ne contient pas de tensioactif, ou dans lequel le fluide de fracturation ne contient pas d'agent de réticulation ou de composant qui est réticulé.

6. Procédé selon la revendication 2, dans lequel le fluide de fracturation comprend en outre : c) un tensioactif non ionique, autre que de l'oxyde de polyéthylène et le polymère non ionique.

7. Procédé selon la revendication 1, dans lequel le poids moléculaire moyen en poids de l'oxyde de polyéthylène dans le fluide de fracturation aqueux est compris entre 2 M et 10 M.

8. Procédé selon la revendication 1, dans lequel le rapport pondéral polymère non ionique : oxyde de polyéthylène est de 1 : 5 à 5 : 1.

9. Procédé selon la revendication 1, dans lequel le fluide de fracturation comprend en outre un agent de soutènement.

10. Procédé selon la revendication 9, dans lequel la densité apparente de l'agent de soutènement est inférieure ou égale à 2,25, de préférence dans lequel la densité apparente de l'agent de soutènement est inférieure ou égale à 1,75.

11. Procédé selon la revendication 1, dans lequel le polymère non ionique est une poudre de guar ayant une taille de particule de 60 à 400 mesh (37 à 250 µm).
